# EUROPEAN PATENT APPLICATION

(11) **EP 4 749 814 A1**
(43) Date of publication of application: **27.05.2026**
(21) Application number: 24853560.1
(22) Date of filing: 30.07.2024
(51) Int. Cl.: H01P 1/213

(54) **RADIO FREQUENCY DEVICE, ANTENNA SYSTEM, AND BASE STATION**

(30) Priority: 11.08.2023 CN 202311016830
(71) Applicant: HUAWEI TECHNOLOGIES CO., LTD., Shenzhen 518129 (CN)
(72) Inventor: XIAO, Weihong, Shenzhen, Guangdong 518129 (CN); JIN, Rui, Shenzhen, Guangdong 518129 (CN); DENG, Liangyong, Shenzhen, Guangdong 518129 (CN); CAI, Dantao, Shenzhen, Guangdong 518129 (CN); DUAN, Wen, Shenzhen, Guangdong 518129 (CN)
(74) Representative: Thun, Clemens
(86) International application number: PCT/CN2024/108471
(87) International publication number: WO 2025/036148

(57) **Abstract**

This application relates to the field of radio frequency technologies, and discloses a radio frequency component, an antenna system, and a base station. The radio frequency component combines a first signal and a second signal into a third signal, and splits the third signal into the first signal and the second signal. The radio frequency component includes a first 90° bridge, a second 90° bridge, a first filter, and a second filter. A first port and a second port of the first 90° bridge are mutually isolated from each other, and the first port and a fourth port are through ports with respect to each other. The fourth port is connected to a signal-absorbing load. A first port and a second port of the second 90° bridge are mutually isolated from each other. In the first 90° bridge and the second 90° bridge, the two first ports are connected via the first filter, and the two second ports are connected via the second filter. An operating frequency band of the first 90° bridge and an operating frequency band of the second 90° bridge cover a frequency of the first signal and a frequency of the second signal. An operating frequency band of the first filter and an operating frequency band of the second filter cover the frequency of the first signal but do not cover the frequency of the second signal. The radio frequency component is a reflectionless component, and can mitigate resonance phenomena.

## Description

This application claims priority to Chinese Patent Application No. 202311016830.9, filed with the China National Intellectual Property Administration on August 11, 2023, and entitled "RADIO FREQUENCY COMPONENT, ANTENNA SYSTEM, AND BASE STATION", which is incorporated herein by reference in its entirety.

### TECHNICAL FIELD

This application relates to the field of radio frequency technologies, and in particular, to a radio frequency component, an antenna system, and a base station.

### BACKGROUND

With the development of communication technologies, base station antennas (antenna) are becoming more important in wireless communication systems. To meet operating requirements of diverse application scenarios, these antennas are now designed with ever higher integration. For example, current antenna systems with independent remote electrical tilt for different frequencies generally incorporate cascaded parts like radiating elements, combiners for frequency division of the radiating elements, main feeder combiners, phase shifters (phase shift), power dividers, and filters.

However, existing radiating elements, combiners, phase shifters, power dividers, and filters are all reflective components. Within specific frequency bands, these components are in a standing-wave matching state, that is, an output impedance of a signal source matches an input impedance of a load, allowing signals to be fully transmitted to the load through a transmission line. In other frequency bands, these parts are in a standing-wave mismatching state, that is, the output impedance of the signal source does not match the input impedance of the load, causing some of the signals to be reflected back. These cascaded reflective components generate resonance within some frequency bands, resulting in problems such as signal attenuation, distortion, or interference, and consequently compromising operating performance of the antenna system.

### SUMMARY

To resolve the foregoing problem, this application provides a radio frequency component, an antenna system, and a base station. The radio frequency component is a reflectionless component, and can eliminate unnecessary signals in a transmission process, to achieve a reflectionless effect and effectively mitigate the foregoing resonance phenomenon, thereby further improving operating performance.

According to a first aspect, this application provides a radio frequency component, configured to combine a first signal and a second signal into a third signal, or split the third signal into a first signal and a second signal. The radio frequency component includes a first 90° bridge, a second 90° bridge, a first filter, and a second filter. A first port of the first 90° bridge and a second port of the first 90° bridge are mutually isolated from each other, the first port of the first 90° bridge and a fourth port of the first 90° bridge are through ports with respect to each other, and the fourth port of the first 90° bridge is connected to a signal-absorbing load. A first port of the second 90° bridge and a second port of the second 90° bridge are mutually isolated from each other. The first port of the first 90° bridge is connected to the first port of the second 90° bridge via the first filter, and the second port of the first 90° bridge is connected to the second port of the second 90° bridge via the second filter. Both an operating frequency band of the first 90° bridge and an operating frequency band of the second 90° bridge cover a frequency of the first signal and a frequency of the second signal. An operating frequency band of the first filter and an operating frequency band of the second filter cover the frequency of the first signal but do not cover the frequency of the second signal.

In the foregoing radio frequency component, connection relationships between the first 90° bridge, the second 90° bridge, the first filter, and the second filter are appropriately designed, so that not only a combining function and a splitting function are implemented, but also an unnecessary signal can be effectively prevented from being reflected to the outside of an input port, thereby achieving a reflectionless effect, and enabling the radio frequency component to have good operating performance.

In a possible implementation of the first aspect, the second port of the second 90° bridge and a third port of the second 90° bridge are through ports with respect to each other. The third port of the first 90° bridge is configured to receive the first signal, and the third port of the second 90° bridge is configured to receive the second signal. When the first signal is input into the third port of the first 90° bridge, and the second signal is input into the third port of the second 90° bridge, a fourth port of the second 90° bridge can output the third signal obtained by combining the first signal and the second signal. Alternatively, the fourth port of the second 90° bridge is configured to receive the third signal. When the third signal is input into the fourth port of the second 90° bridge, the third port of the first 90° bridge can output the first signal, and the third port of the second 90° bridge can output the second signal.

According to a second aspect, this application provides a radio frequency component, configured to filter a third signal. The third signal includes a first signal and a second signal. The radio frequency component includes a first 90° bridge, a second 90° bridge, a first filter, and a second filter. A first port of the first 90° bridge and a second port of the first 90° bridge are mutually isolated from each other, the first port of the first 90° bridge and a fourth port of the first 90° bridge are through ports with respect to each other, a first port of the second 90° bridge and a second port of the second 90° bridge are mutually isolated from each other, the second port of the second 90° bridge and a third port of the second 90° bridge are through ports with respect to each other, and the fourth port of the first 90° bridge and the third port of the second 90° bridge are respectively connected to signal-absorbing loads. The first port of the first 90° bridge is connected to the first port of the second 90° bridge via the first filter, and the second port of the first 90° bridge is connected to the second port of the second 90° bridge via the second filter. Both an operating frequency band of the first 90° bridge and an operating frequency band of the second 90° bridge cover a frequency of the first signal and a frequency of the second signal. An operating frequency band of the first filter and an operating frequency band of the second filter cover the frequency of the first signal but do not cover the frequency of the second signal.

In the foregoing radio frequency component, connection relationships between the first 90° bridge, the second 90° bridge, the first filter, and the second filter are appropriately designed, so that not only a filtering function is implemented, but also an unnecessary signal can be effectively prevented from being reflected to the outside of an input port, thereby achieving a reflectionless effect, and enabling the radio frequency component to have good operating performance.

In a possible implementation of the second aspect, one of a third port of the first 90° bridge and a fourth port of the second 90° bridge is configured to receive the third signal, and the other port is configured to output the first signal.

According to a third aspect, this application provides a radio frequency component, configured to filter a third signal. The third signal consists of a first signal and a second signal. The radio frequency component includes a first 90° bridge, a second 90° bridge, a first filter, and a second filter. A first port of the first 90° bridge and a second port of the first 90° bridge are mutually isolated from each other, the first port of the first 90° bridge and a fourth port of the first 90° bridge are through ports with respect to each other, and a third port of the first 90° bridge and the fourth port of the first 90° bridge are respectively connected to signal-absorbing loads. A first port of the second 90° bridge and a second port of the second 90° bridge are mutually isolated from each other. The first port of the first 90° bridge is connected to the first port of the second 90° bridge via the first filter, and the second port of the first 90° bridge is connected to the second port of the second 90° bridge via the second filter. Both an operating frequency band of the first 90° bridge and an operating frequency band of the second 90° bridge cover a frequency of the first signal and a frequency of the second signal. An operating frequency band of the first filter and an operating frequency band of the second filter cover the frequency of the first signal but do not cover the frequency of the second signal.

In the foregoing radio frequency component, connection relationships between the first 90° bridge, the second 90° bridge, the first filter, and the second filter are appropriately designed, so that not only a filtering function is implemented, but also an unnecessary signal can be effectively prevented from being reflected to the outside of an input port, thereby achieving a reflectionless effect, and enabling the radio frequency component to have good operating performance.

In a possible implementation of the third aspect, one of a third port of the second 90° bridge and a fourth port of the second 90° bridge is configured to receive the third signal, and the other port is configured to output the second signal.

In a possible implementation of the first aspect, the second aspect, or the third aspect, a first bridge arm between the first port and the second port of the first 90° bridge is grounded; and/or a second bridge arm between the third port and the fourth port of the first 90° bridge is grounded. In this way, operating performance of the first 90° bridge is further improved.

In a possible implementation of the first aspect, the second aspect, or the third aspect, in the first 90° bridge, a midpoint of a third bridge arm between the first port and the fourth port is connected to a midpoint of a fourth bridge arm between the second port and the third port via a fifth bridge arm, and the length of the third bridge arm and the length of the fourth bridge arm are both λ/2, where λ is a wavelength of a signal at a center frequency of the operating frequency band of the first 90° bridge.

The fifth bridge arm is added in the first 90° bridge, so that an operating bandwidth can be effectively increased, to improve operating performance.

In a possible implementation of the first aspect, the second aspect, or the third aspect, both the third bridge arm and the fourth bridge arm of the first 90° bridge are in a curved shape.

According to an implementation of this application, both the third bridge arm and the fourth bridge arm of the first 90° bridge are in a curved shape, so that dimensions occupied by the third bridge arm and the fourth bridge arm can be effectively reduced, thereby reducing a size of the first 90° bridge, and facilitating miniaturization of the first 90° bridge.

In a possible implementation of the first aspect, the second aspect, or the third aspect, a first bridge arm between the first port and the second port of the second 90° bridge; and/or a second bridge arm between the third port and a fourth port of the second 90° bridge is grounded. In this way, operating performance of the second 90° bridge is further improved.

In a possible implementation of the first aspect, the second aspect, or the third aspect, in the second 90° bridge, a midpoint of a third bridge arm between the first port and the fourth port is connected to a midpoint of a fourth bridge arm between the second port and the third port via a fifth bridge arm, and the length of the third bridge arm and the length of the fourth bridge arm are both λ/2, where λ is a wavelength of a signal at a center frequency of the operating frequency band of the second 90° bridge. Both the third bridge arm and the fourth bridge arm of the second 90° bridge are in a curved shape.

The fifth bridge arm is added in the second 90° bridge, so that an operating bandwidth can be effectively increased, to improve operating performance. In addition, both the third bridge arm and the fourth bridge arm of the second 90° bridge are in a curved shape, so that dimensions occupied by the third bridge arm and the fourth bridge arm can be effectively reduced, thereby reducing a size of the second 90° bridge, and facilitating miniaturization of the second 90° bridge.

In a possible implementation of the first aspect, the second aspect, or the third aspect, the radio frequency component further includes a substrate, the first 90° bridge and the second 90° bridge are separately disposed on a same side of the substrate, a metal layer is disposed on a side that is of the substrate and that is opposite to the first 90° bridge and the second 90° bridge, and the first filter and the second filter are disposed on the metal layer.

The substrate can play a supporting role. In addition, the metal layer can provide reliable grounding and conductive functions.

In a possible implementation of the first aspect, the second aspect, or the third aspect, the first filter and the second filter are dielectric substrate filters or cavity filters.

In a possible implementation of the first aspect, the second aspect, or the third aspect, the first filter and the second filter are cavity filters, and the substrate is a tuning cover plate of the cavity filter.

When the substrate is used as the tuning cover plate of the first filter and the second filter, no additional tuning cover plate needs to be disposed for the first filter and the second filter, thereby reducing a quantity of components, to facilitate implementation of low costs and miniaturization.

In a possible implementation of the first aspect, the second aspect, or the third aspect, a plurality of resonators are disposed in a cavity of the cavity filter, the substrate covers an opening of the cavity, a plurality of tuning sleeves are disposed on the metal layer, one tuning screw is fixed in each tuning sleeve, and a plurality of tuning screws cooperate with the plurality of resonators in one-to-one correspondence.

On this basis, a frequency of a resonator may be adjusted by adjusting a depth of each tuning screw inserting into a corresponding resonator, to meet operational requirements in different application scenarios.

In a possible implementation of the first aspect, the second aspect, or the third aspect, the first port and the second port of the first 90° bridge are respectively connected to the first filter and the second filter through a metalized via or a filter port connection pin; and the first port and the second port of the second 90° bridge are respectively connected to the first filter and the second filter through a metalized via or a filter port connection pin.

In a possible implementation of the first aspect, the second aspect, or the third aspect, the substrate includes any one of a glass substrate, a plastic substrate, a ceramic substrate, or a printed circuit board.

According to a fourth aspect, this application provides an antenna system, including a radiating element and the radio frequency component according to any one of the first aspect, a possible implementation of the first aspect, the second aspect, a possible implementation of the second aspect, the third aspect, and a possible implementation of the third aspect, where the radio frequency component is connected to the radiating element.

According to a fifth aspect, this application provides a base station, including an antenna mounting support and the antenna system in the fourth aspect, where the antenna system is installed on the antenna mounting support.

### BRIEF DESCRIPTION OF DRAWINGS

FIG. 1 is an example diagram of a structure of a 90° bridge;
FIG. 2 is a diagram of a structure of a base station according to an embodiment of this application;
FIG. 3 is a block diagram of a structure of an antenna system according to an embodiment of this application;
FIG. 4A to FIG. 4C are diagrams of several types of feeding networks in an antenna system according to an embodiment of this application;
FIG. 5 is a block diagram of a structure of a radio frequency component according to an embodiment of this application;
FIG. 6A and FIG. 6B are diagrams of transmission of a signal S1 and a signal S2 in a radio frequency component according to an embodiment of this application;
FIG. 7A is a diagram of transmission of a signal S2 input into a third port of a first 90° bridge according to some embodiments;
FIG. 7B is a diagram of transmission of a signal S1 input into a third port of a second 90° bridge according to some embodiments;
FIG. 8A to FIG. 8C are diagrams of a first structure of a radio frequency component according to an embodiment of this application, where FIG. 8A is a side view of the radio frequency component, FIG. 8B is a top view of the radio frequency component, and FIG. 8C is a bottom view of the radio frequency component;
FIG. 9A to FIG. 9C are diagrams of a second structure of a radio frequency component according to an embodiment of this application, where FIG. 9A is a side sectional view of the radio frequency component, FIG. 9B is a first top view of the radio frequency component, and FIG. 9C is a second top view of the radio frequency component, where a first 90° bridge, a second 90° bridge, and a substrate are not shown;
FIG. 10 is an example diagram of a structure of a substrate used as a tuning cover plate according to an embodiment of this application;
FIG. 11A shows a first example connection between a first port of a first 90° bridge and a first connection port of a first filter according to an embodiment of this application;
FIG. 11B shows a second example connection between a first port of a first 90° bridge and a first connection port of a first filter according to an embodiment of this application;
FIG. 12 is a diagram of filtering by a radio frequency component according to some embodiments of this application; and
FIG. 13 is a diagram of filtering by a radio frequency component according to some other embodiments of this application.

### DESCRIPTION OF EMBODIMENTS

To make the objectives, technical solutions, and advantages of this application clearer, the following further describes the implementations of this application in detail with reference to the accompanying drawings.

It should be understood that "a plurality of" in this application means two or more. In descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, to clearly describe the technical solutions of this application, words such as "first" and "second" are used to distinguish between same items or similar items whose functions are basically the same. A person skilled in the art may understand that the terms such as "first" and "second" do not limit a quantity or an execution sequence, and the terms such as "first" and "second" do not indicate a definite difference.

For ease of understanding the technical solutions of this application, some concepts or terms in this application are first explained and described.

90° bridge: The 90° bridge may include four bridge arms and four ports. The four bridge arms are connected end-to-end to form a quadrilateral loop. Each port is located at a junction between two adjacent bridge arms. When one of the ports is used as an input terminal, the remaining three ports serves as an isolated terminal, a through terminal, and a coupling terminal. When a signal is input into the input terminal, the signal can be split into two equal-amplitude signals that are output from the coupling terminal and the through terminal respectively. In addition, the signal output by the coupling terminal exhibits 90° phase lag relative to the signal output by the through terminal.

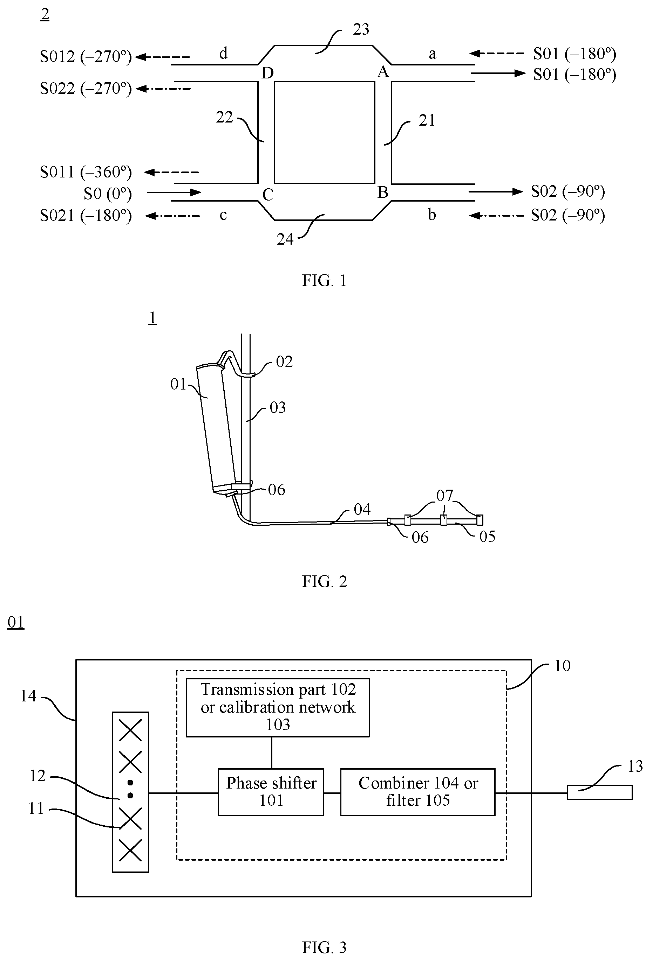

Specifically, FIG. 1 is an example diagram of a structure of a 90° bridge 2. As shown in FIG. 1, the 90° bridge 2 includes a first bridge arm 21, a second bridge arm 22, a third bridge arm 23, a fourth bridge arm 24, a first port a, a second port b, a third port c, and a fourth port d.

The first bridge arm 21, the fourth bridge arm 24, the second bridge arm 22, and the third bridge arm 23 are connected end-to-end, to form a square-like structure. The first port a is located at a junction A between the first bridge arm 21 and the third bridge arm 23. The second port b is located at a junction B between the first bridge arm 21 and the fourth bridge arm 24. The port c is located at a junction C between the second bridge arm 22 and the fourth bridge arm 24. The port d is located at a junction D between the second bridge arm 22 and the third bridge arm 23.

The length of a path from the junction A to the junction B (that is, the length of the first bridge arm 21), the length of a path from the junction B to the junction C, the length of a path from the junction C to the junction D (that is, the length of the second bridge arm 22), and the length of a path from the junction D to the junction A are all λ/4, where λ is a wavelength of a signal at a center frequency of an operating frequency band of the 90° bridge 2. Characteristic impedances of the first bridge arm 21 and the second bridge arm 22 are both Z_0. Characteristic impedances of the third bridge arm 23 and the fourth bridge arm 24 are both Z_0/√2. Characteristic impedances of the four ports a to d all are Z_0.

The 90° bridge 2 can split an input signal into two equal-amplitude outputs with a 90° phase difference. For example, when a signal S0 is input into the third port c, the signal S0 is split into a signal S01 and a signal S02. The signal S01 can be output from the first port a, and the signal S02 can be output from the second port b. An amplitude of the signal S01 is equal to an amplitude of the signal S02, and a phase of the signal S01 is 90° lags a phase of the signal S02. For example, if a phase of the signal S0 may be 0°, the phase of the signal S01 may be -180°, and the phase of the signal S02 may be -90°. The fourth port d outputs no signal. In this case, the third port c is referred to as an input terminal, the first port a is referred to as a coupling terminal, the second port b is referred to as a through terminal, and the fourth port d is referred to as an isolated terminal.

The 90° bridge 2 can further combine two equal-amplitude input signals with a 90° phase difference into one output. For example, when the signal S01 is input into the first port a, and the signal S02 is input into the second port b, the signal S01 and the signal S02 may cancel each other at the third port c, and are combined and output at the fourth port d. Specifically, when the first port a is used as an input terminal and is input with the signal S01, the second port b is an isolated terminal, the third port c is a coupling terminal, and the fourth port d is a through terminal. Based on the foregoing splitting characteristic of the 90° bridge 2, the third port c can output a signal S011, and the fourth port d can output a signal S012. The signal S011 and the signal S012 have equal amplitudes, and a phase (for example, -360°) of the signal S011 is 90° lags a phase (for example, -270°) of the signal S012. When the second port b is used as an input terminal and is input with the signal S02, the port a serves as an isolated terminal, the third port c serves as a through terminal, and the fourth port d serves as a coupling terminal. Based on the foregoing splitting characteristic of the 90° bridge 2, the third port c can output a signal S021, and the fourth port d can output a signal S022. The signal S021 and the signal S022 have equal amplitudes, and a phase (for example, -270°) of the signal S022 is 90° lags a phase (for example, -180°) of the signal S022. In conclusion, at the third port c, the signal S011 and the signal S021 are equal-amplitude and phase-inverted signals, the signal S011 and the signal S021 cancel each other, and the third port c outputs no signal. At the fourth port d, the signal S012 and the signal S022 are equal-amplitude and in-phase signals, and the signal S012 and the signal S022 are combined and output from the fourth port d.

Reversely, when the first port a is input with the signal S02, and the second port b is input with the signal S01, the signal S01 and the signal S02 may be combined at the third port c, and cancel each other at the fourth port d. For specific transmission processes of the signal S02 at the first port a and the signal S01 at the second port b, refer to the foregoing specific transmission processes of the signal S01 at the first port a and the signal S02 at the second port b. Details are not described herein again.

It may be understood that the foregoing 90° bridge 2 is of a reciprocal structure, any one of the ports a to d may be used as an input terminal, and a corresponding isolated terminal and output terminal may also change locations as the input terminal changes.

For example, the first port a and the second port b are mutually isolated from each other. That is, when either of the first port a and the second port b is an input terminal, the other port is an isolated terminal. The second port b and the third port c are through ports with respect to each other. That is, when either of the second port b and the third port c is an input terminal, the other port is a through terminal. The third port c and the fourth port d are also mutually isolated, and the fourth port d and the first port a are also through-connected.

It may be understood that the foregoing 90° bridge 2 may alternatively be implemented in another form other than the structure shown in FIG. 1, provided that a function of the 90° bridge 2 can be implemented. This is not limited in this application.

Implementations of this application are further described below in detail with reference to accompanying drawings.

This application provides a radio frequency component, an antenna system, and a base station. The radio frequency component provided in this application is a reflectionless component, so as to effectively mitigate resonance phenomena generated by cascading frequency selection components, and has good operating performance. The foregoing antenna system may include but is not limited to any one or more of a passive antenna or a multiple-input multiple-output (multiple-input multiple-output, MIMO) system antenna.

FIG. 2 is a diagram of a structure of a base station 1 according to an embodiment of this application. With reference to FIG. 2, the base station 1 includes an antenna system 01, an antenna adjusting bracket 02, a pole 03 (used as an "antenna mounting support"), an outdoor jumper 04, a feeder 05, a connector sealing member 06, and a ground apparatus 07.

The antenna system 01 is mounted on the pole 03 via the antenna adjusting bracket 02, to facilitate receiving or transmitting of a signal of the antenna system 01.

One end of the feeder 05 is connected to the antenna system 01 through the outdoor jumper 04, and the other end of the feeder 05 is connected to a transmit device (not shown in the figure), so that a signal can be transmitted between the transmit device and the antenna system 01.

The connector sealing member 06 is disposed at a junction between the antenna system 01 and the outdoor jumper 04 and a junction between the outdoor jumper 04 and the feeder 05, to perform an insulation sealing function. The connector sealing member 06 may be an insulation sealing tape or a polyvinyl chloride (polyvinyl chloride, PVC) insulation adhesive.

The ground apparatus 07 is disposed on the feeder 05. The ground apparatus 07 can implement functions such as electrical grounding, lightning protection, overvoltage protection, and device performance maintenance, to help ensure operation stability and security of the base station 1.

FIG. 3 is a block diagram of a structure of an antenna system 01 according to an embodiment of this application. As shown in FIG. 3, the antenna system 01 includes a feeding network (feeding network) 10, a radiating element 11, a reflection panel 12, an antenna connector 13, and a radome 14.

The feeding network 10, the radiating element 11, and the reflection panel 12 are all located in the radome 14. The radome 14 has a good electromagnetic wave penetration characteristic in terms of electrical performance, and can withstand impact of an external harsh environment in terms of mechanical performance, so as to protect an antenna system 01 from being affected by an external environment.

The radiating element 11 is disposed on a surface of one side of the reflection panel 12, and is connected to the antenna connector 13 through the feeding network 10. The radiating element 11 may also be referred to as an antenna element, an antenna dipole, a dipole, or the like. The radiating element 11 is an element that forms a basic structure of an antenna array, and can effectively send or receive an antenna signal. In the antenna system 01, frequencies of different radiating elements 11 may be the same or different. The reflection panel 12 may also be referred to as a bottom panel, an antenna panel, a reflective surface panel, or the like. For example, the reflection panel 12 may be made of a metal material. When the antenna system 01 receives a signal, the reflection panel 12 may reflect and aggregate the antenna signal on a reception point, to implement directional reception.

The feeding network 10 is usually formed by cascading a plurality of radio frequency components. The feeding network 10 can feed a signal to the radiating element 11 based on a specific amplitude and phase, or send a received signal to a baseband processing unit (not shown in the figure) connected to the antenna connector 13 based on a specific amplitude and phase. The feeding network 10 may include a phase shifter 101, a transmission part 102, and a calibration network 103. The phase shifter 101 may be configured to change a largest direction of signal radiation of the antenna system 01. The phase shifter 101 may be connected to the transmission part 102, to implement different radiation beam directions via the transmission part 101. Alternatively, the phase shifter 101 may be connected to the calibration network 102, to obtain a calibration signal needed by the system.

In addition, the feeding network 10 may further include a radio frequency component, such as a combiner 104 or a filter 105, configured to extend performance. The combiner 104 can combine a plurality of input signals of different frequencies into one output, or when the combiner 104 is used reversely, the combiner 104 can further split one input signal into a plurality of outputs based on different frequencies. The filter 105 may be configured to filter out an interference signal, to improve a signal transmission effect.

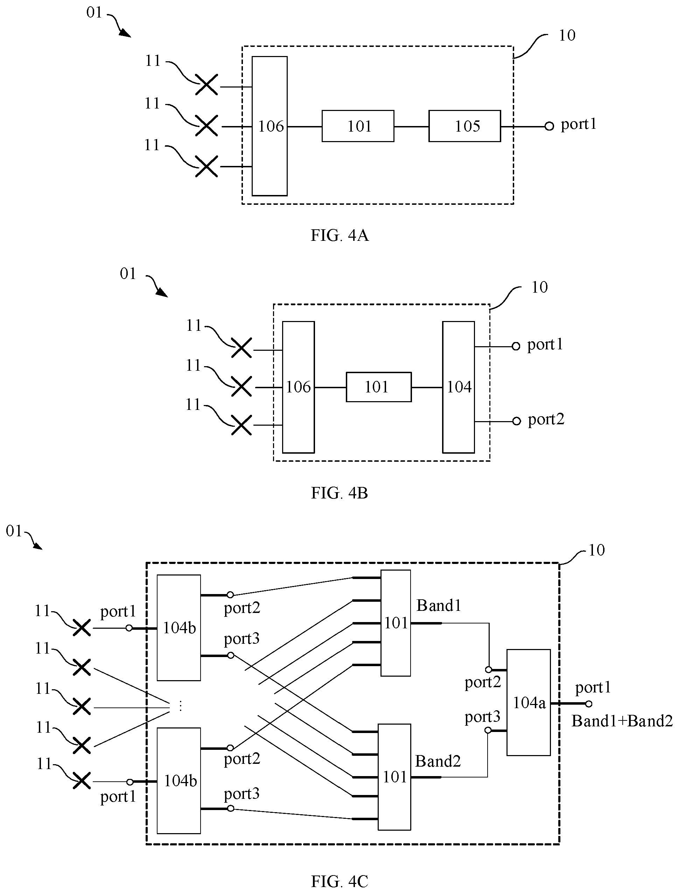

The foregoing feeding network 10 may have different cascaded architectures, to meet feeding requirements in different application scenarios. For example, FIG. 4A to FIG. 4C are diagrams of several types of feeding networks 10 in an antenna system 01 according to an embodiment of this application.

In some embodiments of this application, the feeding network 10 in the antenna system 01 may be in a 1t3 array form, that is, one port corresponds to three radiating elements. With reference to FIG. 4A, the feeding network 10 may include a phase shifter 101, a filter 105, and a power divider 106. The three radiating elements 11 are connected to one end of the phase shifter 101 through the power divider 106. The other end of the phase shifter 101 is connected to the filter 105. A port port1 of the filter 105 may be configured to connect to another component (for example, the foregoing antenna connector 13). In this way, the feeding network 10 may combine three signals sent by the three radiating elements 11 into one output, or split a signal of a specific frequency into three signals as required and feed the three signals to the three radiating elements 11 respectively.

In some other embodiments of this application, the feeding network 10 in the antenna system 01 may alternatively be in a 2t3 array form, that is, two ports correspond to three radiating elements. With reference to FIG. 4B, the feeding network 10 may include a phase shifter 101, a combiner 104, and a power divider 106. The three radiating elements 11 are connected to one end of the phase shifter 101 through the power divider 106. The other end of the phase shifter 101 is connected to the combiner 104. A port port1 and a port port2 of the combiner 104 may be configured to connect to another component (for example, the foregoing antenna connector 13). In this way, the feeding network 10 may convert three signals sent by the three radiating elements 11 into two outputs, or convert two signals into three signals and feed the three signals to the three radiating elements 11 respectively.

In some other embodiments of this application, the feeding network 10 in the antenna system 01 may further have a more complex cascaded architecture, to implement an independent remote electrical tilt function of the antenna system 01 for different frequencies. With reference to FIG. 4C, the feeding network 10 may include two phase shifters 101, a main feeder combiner 104a, and five element combiners 104b. It should be noted that FIG. 4C shows only two element combiners 104b, and the other three element combiners 104b are replaced with ellipses. Five radiating elements 11 are in one-to-one correspondence with the five element combiners 104b. Each radiating element 11 is connected to a port port1 of a corresponding element combiner 104b. A port port2 and a port port3 of each element combiner 104b are respectively connected to one end of the two phase shifters 101. The other ends of the two phase shifters 101 are respectively connected to a port port2 and a port port3 of the main feeder combiner 104a. A port port1 of the main feeder combiner 104a may be connected to another component (for example, the foregoing antenna connector 13). In this way, the feeding network 10 may split five signals sent by the five radiating elements 11 into signals of different frequency bands (for example, Band1 and Band2), perform corresponding processing on the signals of the frequency bands, and then combine the signals into one output, thereby implementing an independent remote electrical tilt function of the antenna system 01 for different frequencies.

In some technical solutions, all radio frequency components (for example, a phase shifter, a combiner, a filter, and a power divider) in the feeding network are reflective components having a specific frequency selection characteristic. After these reflective components are cascaded to form the feeding network 10 of the antenna system 01, resonance phenomena are generated in some frequency bands, resulting in problems such as signal attenuation, distortion, or interference, and affecting operating performance of the antenna system 01. To mitigate the resonance phenomenon, a radio frequency component (for example, a reflectionless combiner (reflectionless combiner), a reflectionless filter (reflectionless filter), a reflectionless power divider (reflectionless power divider), or a reflectionless phase shifter (reflectionless phase shifter)) needs to be redesigned to achieve a reflectionless effect.

To resolve the foregoing problem, this application provides a radio frequency component. The radio frequency component is a reflectionless component, so that an unnecessary signal can be eliminated in a transmission process, thereby achieving a reflectionless effect, effectively mitigating the foregoing resonance phenomenon, to further improve operating performance. The following provides detailed descriptions with reference to the accompanying drawings.

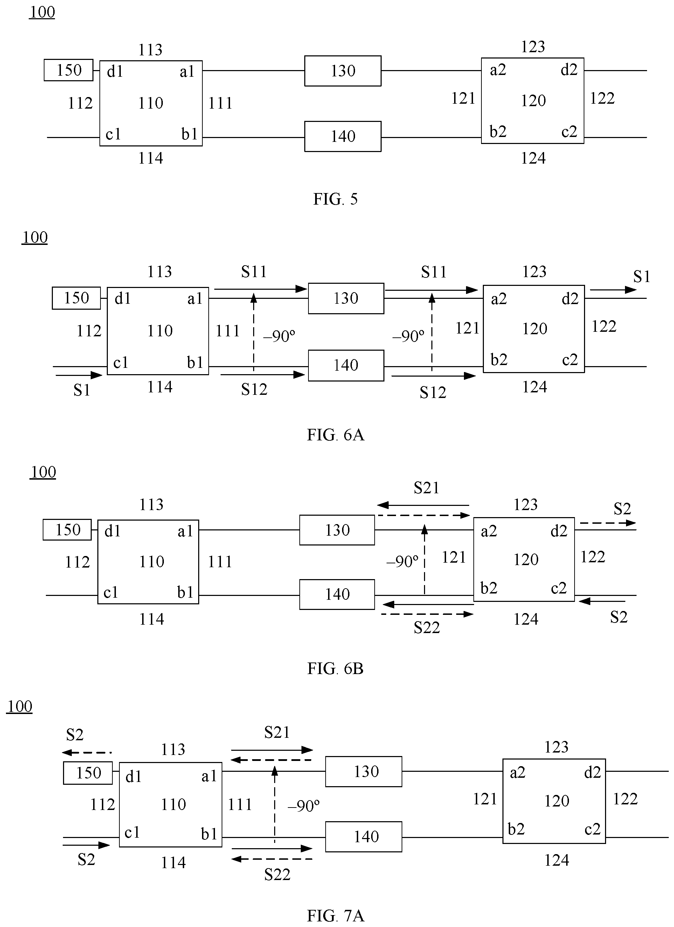

FIG. 5 is a block diagram of a structure of a radio frequency component 100 according to an embodiment of this application. As shown in FIG. 5, the radio frequency component 100 includes a first 90° bridge 110, a second 90° bridge 120, a first filter 130, and a second filter 140.

Specifically, the first 90° bridge 110 includes a first port al, a second port b1, a third port c1, and a fourth port d1. The first port al and the second port b1 are mutually isolated from each other, and the first port al and the fourth port d1 are through ports with respect to each other.

For example, the first 90° bridge 110 includes a first bridge arm 111, a second bridge arm 112, a third bridge arm 113, and a fourth bridge arm 114. The first bridge arm 111, the fourth bridge arm 114, the second bridge arm 112, and the third bridge arm 113 are connected end-to-end, to form a square-like structure. The first port al may be located at a junction between the first bridge arm 111 and the third bridge arm 113. The second port b1 may be located at a junction between the first bridge arm 111 and the fourth bridge arm 114. The third port c1 may be located at a junction between the second bridge arm 112 and the fourth bridge arm 114. The fourth port d1 may be located at a junction between the second bridge arm 112 and the third bridge arm 113.

The second 90° bridge 120 includes a first port a2, a second port b2, a third port c2, and a fourth port d2. Similarly, the first port a2 and the second port b2 are mutually isolated from each other.

For example, the second 90° bridge 120 includes a first bridge arm 121, a second bridge arm 122, a third bridge arm 123, and a fourth bridge arm 124. The first bridge arm 121, the fourth bridge arm 124, the second bridge arm 122, and the third bridge arm 123 are connected end-to-end, to form a square-like structure. The first port a2 may be located at a junction between the first bridge arm 121 and the third bridge arm 123. The second port b2 may be located at a junction between the first bridge arm 121 and the fourth bridge arm 124. The third port c2 may be located at a junction between the second bridge arm 122 and the fourth bridge arm 124. The fourth port d2 may be located at a junction between the second bridge arm 122 and the third bridge arm 123.

The first port al of the first 90° bridge 110 is connected to the first port a2 of the second 90° bridge 120 via the first filter 130. The second port b1 of the first 90° bridge 110 is connected to the second port b2 of the second 90° bridge 120 via the second filter 140. The fourth port d1 of the first 90° bridge 110 is connected to a signal-absorbing load 150. The foregoing radio frequency component 100 may implement different signal transmission functions (for example, a combining function or a splitting function), and achieve a reflectionless effect. For ease of understanding a signal transmission function and a reflectionless effect of the foregoing radio frequency component 100, the following describes a transmission process of a signal in the radio frequency component 100.

For example, FIG. 6A and FIG. 6B are diagrams of transmission of a signal S1 and a signal S2 in a radio frequency component 100 according to an embodiment of this application. With reference to FIG. 6A and FIG. 6B, both an operating frequency band of the first 90° bridge 110 and an operating frequency band of the second 90° bridge 120 cover a frequency of the signal S1 (used as a first signal) and a frequency of the signal S2 (used as a second signal). Both an operating frequency band of the first filter 130 and an operating frequency band of the second filter 140 cover the frequency of the first signal S1, and do not cover the frequency of the second signal S2. In other words, the first signal S1 can pass via the first filter 130 and the second filter 140. However, the second signal S2 cannot pass via the first filter 130 or the second filter 140.

When the signal S1 is input into the third port c1 of the first 90° bridge 110, and the signal S2 is input into the third port c2 of the second 90° bridge 120, a signal (used as a third signal) obtained by combining the signal S1 and the signal S2 can be output from the fourth port d2 of the second 90° bridge 120, to implement a combining function of the radio frequency component 100. Conversely, when the signal S1 and the signal S2 are both input into the fourth port d2 of the second 90° bridge 120, the signal S1 can be output from the third port c1 of the first 90° bridge 110, and the signal S2 can be output from the third port c2 of the second 90° bridge 120, to implement a splitting function of the radio frequency component 100. On this basis, the radio frequency component 100 may be used as the combiner 104 in FIG. 4B or the main feeder combiner 104a or the element combiner 104b in FIG. 4C. The combiner (for example, the combiner 104, the combiner 104a, and the combiner 104b) is a reflectionless combiner, and can effectively mitigate resonance phenomena, to improve operating performance of the feeding network 10.

It may be understood that a process of transmitting the signal S1 and the signal S2 in a splitting manner and the foregoing process of transmitting the signal S1 and the signal S2 in a combination manner are inverse to each other. For ease of description, the following uses the process of transmitting the signal S1 and the signal S2 in a combination manner as an example for description.

Specifically, based on the foregoing characteristic of the 90° bridge 2, when the signal S1 is input into the third port c1 of the first 90° bridge 110, the signal S1 is split into a signal S11 and a signal S12. The signal S11 is output from the first port al, and the signal S12 is output from the second port b1. An amplitude of the signal S11 is equal to an amplitude of the signal S12, and a phase of the signal S11 is 90° lags a phase of the signal S12. The signal S11 may enter the first port a2 of the second 90° bridge 120 via the first filter 130. The signal S12 may enter the second port b2 of the second 90° bridge 120 via the second filter 140. The signal S11 and the signal S12 can be canceled at the third port c2 of the second 90° bridge 120, and combined into the signal S1 at the fourth port d2 of the second 90° bridge.

Based on the foregoing characteristic of the 90° bridge, when the signal S2 is input into the third port c2 of the second 90° bridge 120, the signal S2 is split into a signal S21 and a signal S22. The signal S21 is output from the first port a2, and the signal S22 is output from the second port b2. An amplitude of the signal S21 is equal to an amplitude of the signal S22, and a phase of the signal S21 is 90° lags a phase of the signal S22. A frequency band of the signal S2 is outside a passband of the first filter 130 and the second filter 140. Therefore, the signal S21 is reflected back to the first port a2 by the first filter 130, and the signal S22 is reflected back to the second port b2 by the second filter 140. Similarly, the reflected signal S21 and the reflected signal S22 can also be canceled at the third port c2 of the second 90° bridge 120, and combined into the signal S2 at the fourth port d2 of the second 90° bridge 120. In this way, the signal S1 and the signal S2 can be combined at the fourth port d2 of the second 90° bridge 120, to implement a combining function of the radio frequency component 100.

When the third port c1 of the first 90° bridge 110 or the third port c2 of the second 90° bridge 120 is input with a non-corresponding signal, the signal may be eliminated in a transmission process, to achieve a reflectionless effect.

For example, FIG. 7A is a diagram of transmission of the signal S2 input into the third port c1 of the first 90° bridge 110 according to some embodiments. With reference to FIG. 7A, when the radio frequency component 100 operates normally, a signal corresponding to the third port c1 of the first 90° bridge 110 is the signal S1. When the signal S2 is input into the third port c1 of the first 90° bridge 110, based on the foregoing characteristic of the 90° bridge, the first port al may output the signal S21, and the second port b1 may output the signal S22. An amplitude of the signal S21 is equal to an amplitude of the signal S22, and a phase of the signal S21 is 90° lags a phase of the signal S22. A frequency band of the signal S2 is outside the passband of the first filter 130 and the second filter 140. Therefore, the signal S21 is reflected back to the first port al by the first filter 130, and the signal S22 is reflected back to the second port b1 by the second filter 140. The reflected signal S21 and the reflected signal S22 can be canceled at the third port c1, and combined into the signal S2 at the fourth port d1. The signal S2 is absorbed by the signal-absorbing load 150 connected to the fourth port d1. In this way, the signal S2 input into the first 90° bridge 110 may be eliminated in a transmission process, and is not reflected to the outside of the first 90° bridge 110, to achieve a reflectionless effect.

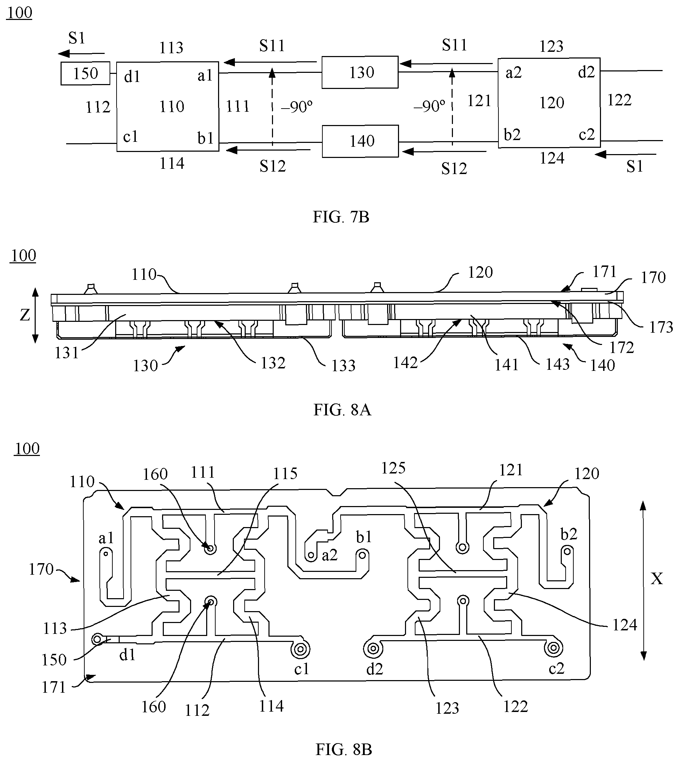

For another example, FIG. 7B is a diagram of transmission of the signal S1 input into the third port c2 of the second 90° bridge 120 according to some embodiments. With reference to FIG. 7B, when the radio frequency component 100 operates normally, a signal corresponding to the third port c2 of the second 90° bridge 120 is the signal S2. When the signal S1 is input into the third port c2 of the second 90° bridge 120, based on the foregoing characteristic of the 90° bridge, the first port a2 may output the signal S11, and the second port b2 may output the signal S12. An amplitude of the signal S11 is equal to an amplitude of the signal S12, and a phase of the signal S11 is 90° lags a phase of the signal S12. The signal S11 can enter the first port al of the first 90° bridge 110 via the first filter 130. The signal S12 can enter the second port b1 of the first 90° bridge 110 via the second filter 140. The signal S11 and the signal S12 can also be canceled at the third port c1 of the first 90° bridge 110, and combined into the signal S1 at the fourth port d1 of the first 90° bridge 110. The signal S1 is absorbed by the signal-absorbing load 150 connected to the fourth port d1. In this way, the signal S1 input into the second 90° bridge 120 may be eliminated in a transmission process, to achieve a reflectionless effect.

In conclusion, in the foregoing radio frequency component 100, connection relationships between the first 90° bridge 110, the second 90° bridge 120, the first filter 130, and the second filter 140 are appropriately designed, so that not only a combining function and a splitting function are implemented, but also an unnecessary signal can be effectively prevented from being reflected to the outside of an input port, thereby achieving a reflectionless effect, and enabling the radio frequency component 100 to have good operating performance.

The following further describes a specific structural form of each part in the radio frequency component 100 with reference to the accompanying drawings.

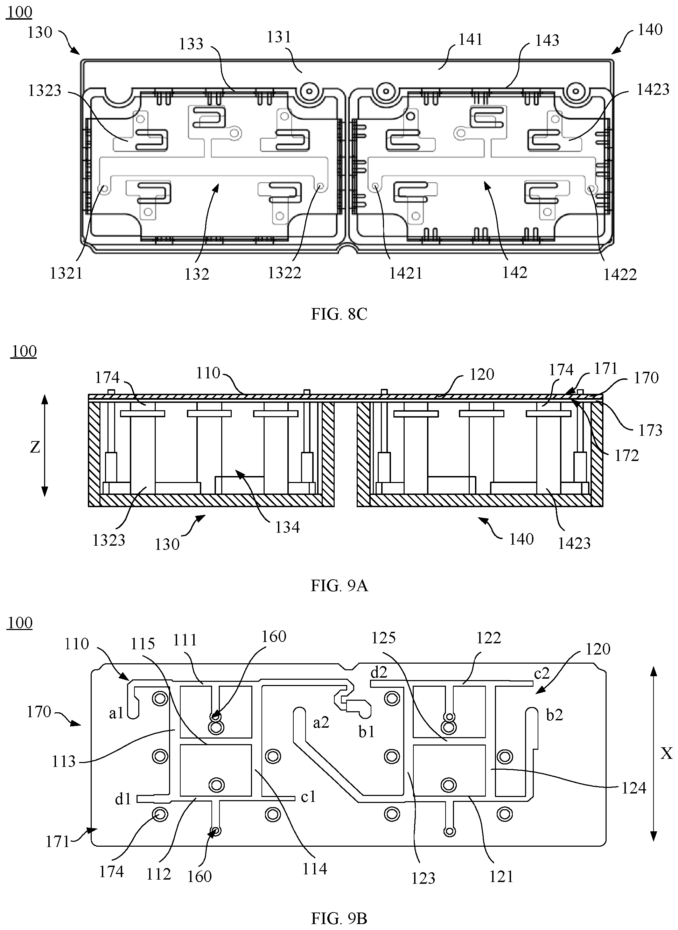

FIG. 8A to FIG. 8C are diagrams of a first structure of a radio frequency component 100 according to an embodiment of this application. FIG. 8A is a side view of the radio frequency component 100, FIG. 8B is a top view of the radio frequency component 100, and FIG. 8C is a bottom view of the radio frequency component 100.

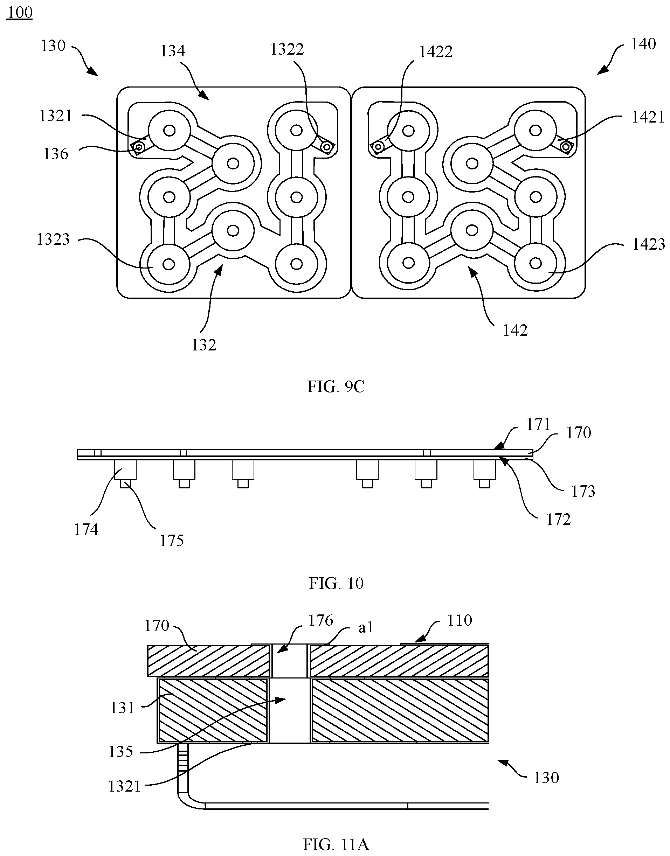

FIG. 9A to FIG. 9C are diagrams of a second structure of a radio frequency component 100 according to an embodiment of this application. FIG. 9A is a side sectional view of the radio frequency component 100, FIG. 9B is a first top view of the radio frequency component 100, and FIG. 9C is a second top view of the radio frequency component 100, where a first 90° bridge 110, a second 90° bridge 120, and a substrate 170 are not shown.

With reference to FIG. 8B and FIG. 9B, in some embodiments of this application, the first bridge arm 111 of the first 90° bridge 110 and/or the second bridge arm 112 of the first 90° bridge 110 may be grounded, to further improve operating performance of the first 90° bridge 110. For example, the first bridge arm 111 of the first 90° bridge 110 and the second bridge arm 112 of the first 90° bridge 110 may be separately grounded through a ground hole 160.

In some embodiments of this application, the first 90° bridge 110 may further include a fifth bridge arm 115, to further increase an operating bandwidth of the first 90° bridge 110. Specifically, as shown in FIG. 8B and FIG. 9B, two ends of the fifth bridge arm 115 are respectively connected to a midpoint of the third bridge arm 113 and a midpoint of the fourth bridge arm 114, so that the overall first 90° bridge 110 is of a shape similar to a digital number 8. The length of the third bridge arm 113 and the length of the fourth bridge arm 114 are both λ/2. λ is a wavelength of a signal at a center frequency of an operating frequency band of the first 90° bridge 110. It may be understood that the length of the third bridge arm 113 is the length of an extended path from one end of the third bridge arm 113 to the other end of the third bridge arm 113. The length of the fourth bridge arm 114 is the length of an extended path from one end of the fourth bridge arm 114 to the other end of the fourth bridge arm 114.

In some embodiments of this application, both the third bridge arm 113 and the fourth bridge arm 114 of the first 90° bridge 110 are in a curved shape, so that sizes of the third bridge arm 113 and the fourth bridge arm 114 in an X direction are reduced, thereby reducing a size of the first 90° bridge 110, and facilitating development to miniaturization of the radio frequency component 100.

In some embodiments of this application, the first bridge arm 121 of the second 90° bridge 120 and/or the second bridge arm 122 of the second 90° bridge 120 may be grounded, to further improve operating performance of the second 90° bridge 120. A specific manner in which the first bridge arm 121 of the second 90° bridge 120 and/or the second bridge arm 122 of the second 90° bridge 120 are/is grounded is consistent with a specific manner in which the foregoing first bridge arm 111 of the first 90° bridge 110 and/or the first bridge arm 112 of the first 90° bridge 110 are/is grounded. Details are not described herein.

In some embodiments of this application, the second 90° bridge 120 may further include a fifth bridge arm 125, to further increase an operating bandwidth of the second 90° bridge 120. A specific layout manner of the fifth bridge arm 125 of the second 90° bridge 120 is consistent with a specific layout manner of the fifth bridge arm 115 of the first 90° bridge 110. Details are not described herein.

In some embodiments of this application, both the third bridge arm 123 and the fourth bridge arm 124 of the second 90° bridge 120 are in a curved shape, so that sizes of the third bridge arm 123 and the fourth bridge arm 124 in the X direction are reduced, thereby reducing a size of the second 90° bridge 120, and facilitating development to miniaturization of the radio frequency component 100.

With reference to FIG. 8A, FIG. 8B, FIG. 9A, and FIG. 9B, in some embodiments of this application, the radio frequency component 100 further includes a substrate 170, to provide a support function. The substrate 170 includes a first side 171 and a second side 172. The first side 171 and the second side 172 may be disposed opposite to each other in a Z direction. For example, the Z direction is perpendicular to the X direction. The first 90° bridge 110 and the second 90° bridge 120 may be disposed on the first side 171 of the substrate 160. A metal layer 173 is disposed on the second side 172 of the substrate 170, to provide reliable grounding and conductive functions. A first filter 130 and a second filter 140 are disposed on the metal layer 173.

In some embodiments of this application, the first filter 130 and the second filter 140 may be dielectric substrate filters or cavity filters.

For example, with reference to FIG. 8A to FIG. 8C, both the first filter 130 and the second filter 140 may be dielectric substrate filters. Specifically, the first filter 130 includes a substrate 131, a filter circuit 132, and a shielding cover 133. The filter circuit 132 is disposed on one side of the substrate 131. The shielding cover 133 covers the filter circuit 132, to shield an impact of an external electromagnetic wave on the filter circuit and prevent an electromagnetic wave generated by the filter circuit from radiating outward. For example, the filter circuit 132 includes a first connection port 1321, a second connection port 1322, and a plurality of resonators 1323. The first connection port 1321 may be configured to connect to a first port a1 of the first 90° bridge 110. The second connection port 1322 may be configured to connect to a first port a2 of the second 90° bridge 120.

Similarly, the second filter 140 also includes a substrate 141, a filter circuit 142, and a shielding cover 144. The filter circuit 142 is disposed on one side of the substrate 141. The shielding cover 143 covers the filter circuit 142. The substrate 131 of the first filter 130 and the substrate 141 of the second filter 140 may be of an integral structure, thereby reducing a quantity of parts, to facilitate implementation of low costs and miniaturization of the radio frequency component 100. In other words, the filter circuit 132 and the filter circuit 142 are disposed on a same substrate. The filter circuit 142 includes a first connection port 1421, a second connection port 1422, and a plurality of resonators 1423. The first connection port 1421 may be configured to connect to a second port b1 of the first 90° bridge 110. The second connection port 1422 may be configured to connect to a second port b2 of the second 90° bridge 120.

For another example, with reference to FIG. 9A to FIG. 9C, both the first filter 130 and the second filter 140 are cavity filters. Specifically, the first filter 130 includes a cavity 134 and a filter circuit 132 disposed in the cavity 134.

The substrate 170 may be used as a tuning cover plate of the first filter 130. In this way, no additional tuning cover plate needs to be disposed for the first filter 130, thereby reducing a quantity of parts, to facilitate implementation of low costs and miniaturization of the radio frequency component 100. FIG. 10 is an example diagram of a structure of a substrate 170 as a tuning cover plate according to an embodiment of this application. Specifically, with reference to FIG. 9A, FIG. 9C, and FIG. 10, the substrate 170 may cover an opening of the cavity 134. A plurality of tuning sleeves 174 are disposed on the metal layer 173 on the substrate 170. For example, the plurality of tuning sleeves 174 may be fastened on the metal layer 173 through welding. One tuning screw 175 is fastened in each tuning sleeve 174. For example, the tuning screw 175 may be fastened in the tuning sleeve 174 by threads. A plurality of tuning screws 175 cooperate with a plurality of resonators 1323 in the filter circuit 132 in one-to-one correspondence. A frequency of a resonator 1323 may be adjusted by adjusting the depth in which each tuning screw 175 enters the corresponding resonator 1323.

It may be understood that a specific structure of the second filter 140 when the second filter 140 is a cavity filter is consistent with a specific structure of the foregoing first filter 130 when the first filter 130 is a cavity filter. Details are not described herein. In addition, it may be understood that when the second filter 140 is a cavity filter, the substrate 170 may also be used as a tuning cover plate of the second filter 140. A specific cooperation manner of the substrate 170 and the second filter 140 is consistent with the foregoing specific cooperation manner of the substrate 170 and the first filter 130. Details are not described herein.

In some embodiments of this application, the first port al and the second port b1 of the first 90° bridge 110 may be respectively connected to the first filter 130 and the second filter 140 through a metalized via or a filter port connection pin. The first port a2 and the second port b2 of the second 90° bridge 120 may be respectively connected to the first filter 130 and the second filter 140 through a metalized via or a filter port connection pin. For ease of description, the following uses a connection manner between the first port al of the first 90° bridge 110 and the first connection port 1321 of the first filter 130 as an example for description.

FIG. 11A shows a first example connection between the first port al of the first 90° bridge 110 and the first connection port 1321 of the first filter 130 according to an embodiment of this application. As shown in FIG. 11A, the substrate 170 is provided with a first metalized via 176 in communication with the first port al. The substrate 131 is provided with a second metalized via 135 in communication with the first connection port 1321. The first metalized via 175 is aligned with the second metalized via 135, so that the first port al of the first 90° bridge 110 can be in communication with the first connection port 1321 of the first filter 130.

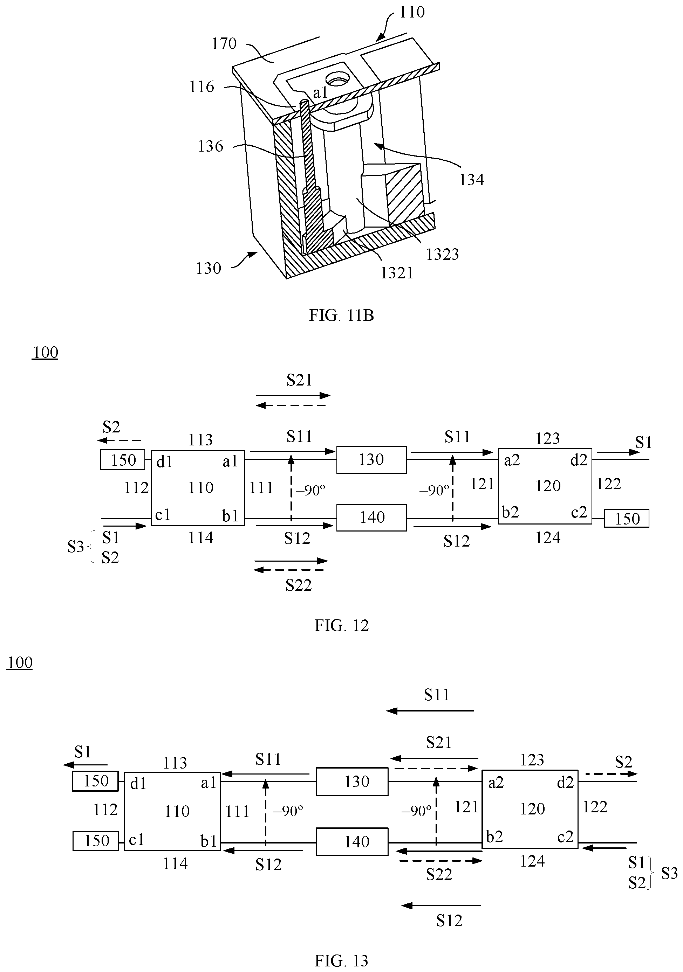

FIG. 11B shows a second example connection between the first port al of the first 90° bridge 110 and the first connection port 1321 of the first filter 130 according to an embodiment of this application. As shown in FIG. 11B, the first filter 130 includes a connection pin 136 connected to the first connection port 1321. An end of the connection pin 136 penetrates the substrate 170, to be connected to a port pad 116 corresponding to the first port al of the first 90° bridge 110, so that the first port al of the first 90° bridge 110 can be in communication with the first connection port 1321 of the first filter 130.

In some embodiments of this application, the substrate 170 may include but is not limited to any one of a glass substrate, a plastic substrate, a ceramic substrate, or a printed circuit board (printed circuit board, PCB). This is not limited in this application.

It may be understood that this embodiment shows example descriptions of the technical solutions of this application, and a person skilled in the art may make other variations. For example, in this embodiment, the radio frequency component 100 may be configured to implement a combining function or a splitting function. In another embodiment, the radio frequency component 100 may also be configured to implement a filtering function. For example, the radio frequency component 100 having the filtering function may be used as the foregoing filter 105. In this case, the filter 105 is a reflectionless filter. When the reflectionless filter is cascaded with another component (for example, a reflective component with a frequency selection characteristic), a resonance phenomenon can be effectively mitigated.

FIG. 12 is a diagram of filtering by a radio frequency component 100 according to some embodiments of this application. With reference to FIG. 12, in some embodiments of this application, a fourth port d1 of a first 90° bridge 110 and a third port c2 of a second 90° bridge in the radio frequency component 100 are respectively connected to signal-absorbing loads 150. One of a third port c1 of the first 90° bridge 110 and a fourth port d2 of the second 90° bridge 120 is configured to receive a signal, and the other port is configured to output a filtered signal.

For example, a signal S3 (used as a third signal) includes a signal S1 and a signal S2. When the signal S3 is input into the third port c1 of the first 90° bridge 110, the signal S1 in the signal S3 can enter the second 90° bridge 120 via the first filter 130 and the second filter 140, and be output from the fourth port c2 of the second 90° bridge 120. The signal S2 in the signal S3 is reflected back by the first filter 130 and the second filter 140, and is eliminated in a transmission process, to implement filtering on the signal S3. For a specific transmission process of the signal S1, refer to FIG. 6A and related descriptions thereof. Details are not described herein. For a specific process of eliminating the signal S2, refer to FIG. 7A and related descriptions thereof. Details are not described herein.

It may be understood that a filtering principle when the signal S3 is input into the fourth port d2 of the second 90° bridge 120 is consistent with a filtering principle when the foregoing signal S3 is input into the third port c1 of the first 90° bridge 110. Details are not described herein.

FIG. 13 is a diagram of filtering by a radio frequency component 100 according to some other embodiments of this application. With reference to FIG. 13, in some other embodiments of this application, a third port c1 and a fourth port d1 of a first 90° bridge 110 in the radio frequency component 100 are respectively connected to signal-absorbing loads 150. One of a third port c2 and a fourth port d2 of a second 90° bridge 120 is configured to receive a signal, and the other is configured to output a filtered signal.

For example, a signal S3 (used as a third signal) includes a signal S1 and a signal S2. When the signal S3 is input into the third port c2 of the second 90° bridge 120, the signal S1 in the signal S3 can enter the first 90° bridge 110 through a first filter 130 and a second filter 140, and is eliminated in a transmission process in the first 90° bridge 110. The signal S2 in the signal S3 is reflected by the first filter 130 and the second filter 140 to the fourth port d2 of the second 90° bridge 120 for output, to implement filtering on the signal S3. For a specific process of eliminating the signal S1, refer to FIG. 7B and related descriptions thereof. Details are not described herein. For a specific transmission process of the signal S2, refer to FIG. 6B and related descriptions thereof. Details are not described herein.

It may also be understood that a filtering principle when the signal S3 is input into the fourth port d2 of the second 90° bridge 120 is consistent with a filtering principle when the foregoing signal S3 is input into the third port c2 of the second 90° bridge 120. Details are not described herein.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. This application may be alternatively implemented without using these details. In addition, to avoid confusion or blurring a focus of this application, some specific details are omitted from the descriptions. It should be noted that embodiments in this application and the features in embodiments may be mutually combined in the case of no conflict.

In the descriptions of this application, it should be noted that, orientations or position relationships indicated by terms such as "center", "up", "down", "left", "right", "vertical", "horizontal", "outer side", "inner side", "circumferential direction", "radial direction", and "axial direction" are based on the orientations or position relationships shown in the accompanying drawings, and are merely intended to describe this application and simplify the descriptions, but are not intended to indicate or imply that an indicated apparatus or element needs to have a specific orientation or be constructed and operated in a specific orientation, and therefore cannot be understood as a limitation on this application.

In the descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand a specific meaning of the foregoing term in this application according to a specific situation.

It is clearly that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A radio frequency component, configured to: combine a first signal and a second signal into a third signal, or split the third signal into the first signal and the second signal, and the radio frequency component comprises a first 90° bridge, a second 90° bridge, a first filter, and a second filter, wherein
a first port of the first 90° bridge and a second port of the first 90° bridge are mutually isolated from each other, the first port of the first 90° bridge and a fourth port of the first 90° bridge are through ports with respect to each other, and the fourth port of the first 90° bridge is connected to a signal-absorbing load;
a first port of the second 90° bridge and a second port of the second 90° bridge are mutually isolated from each other;
the first port of the first 90° bridge is connected to the first port of the second 90° bridge via the first filter, and the second port of the first 90° bridge is connected to the second port of the second 90° bridge via the second filter; and
both an operating frequency band of the first 90° bridge and an operating frequency band of the second 90° bridge cover a frequency of the first signal and a frequency of the second signal; and an operating frequency band of the first filter and an operating frequency band of the second filter cover the frequency of the first signal but do not cover the frequency of the second signal.

2. The radio frequency component according to claim 1, wherein the second port of the second 90° bridge and a third port of the second 90° bridge are through ports with respect to each other;
a third port of the first 90° bridge is configured to receive the first signal, the third port of the second 90° bridge is configured to receive the second signal, and when the first signal is input into the third port of the first 90° bridge, and the second signal is input into the third port of the second 90° bridge, a fourth port of the second 90° bridge can output the third signal obtained by combining the first signal and the second signal; or
the fourth port of the second 90° bridge is configured to receive the third signal, and when the third signal is input into the fourth port of the second 90° bridge, the third port of the first 90° bridge can output the first signal, and the third port of the second 90° bridge can output the second signal.

3. A radio frequency component, configured to filter a third signal, wherein the third signal comprises a first signal and a second signal, and the radio frequency component comprises a first 90° bridge, a second 90° bridge, a first filter, and a second filter, wherein
a first port of the first 90° bridge and a second port of the first 90° bridge are mutually isolated from each other, the first port of the first 90° bridge and a fourth port of the first 90° bridge are through ports with respect to each other, a first port of the second 90° bridge and a second port of the second 90° bridge are mutually isolated from each other, the second port of the second 90° bridge and a third port of the second 90° bridge are through ports with respect to each other, and the fourth port of the first 90° bridge and the third port of the second 90° bridge are respectively connected to signal-absorbing loads;
the first port of the first 90° bridge is connected to the first port of the second 90° bridge via the first filter, and the second port of the first 90° bridge is connected to the second port of the second 90° bridge via the second filter; and
both an operating frequency band of the first 90° bridge and an operating frequency band of the second 90° bridge cover a frequency of the first signal and a frequency of the second signal; and an operating frequency band of the first filter and an operating frequency band of the second filter cover the frequency of the first signal but do not cover the frequency of the second signal.

4. The radio frequency component according to claim 3, wherein one of a third port of the first 90° bridge and a fourth port of the second 90° bridge is configured to receive the third signal, and the other port is configured to output the first signal.

5. A radio frequency component, configured to filter a third signal, wherein the third signal consists of a first signal and a second signal, and the radio frequency component comprises a first 90° bridge, a second 90° bridge, a first filter, and a second filter, wherein
a first port of the first 90° bridge and a second port of the first 90° bridge are mutually isolated from each other, the first port of the first 90° bridge and a fourth port of the first 90° bridge are through ports with respect to each other, and a third port of the first 90° bridge and the fourth port of the first 90° bridge are respectively connected to signal-absorbing loads;
a first port of the second 90° bridge and a second port of the second 90° bridge are mutually isolated from each other;
the first port of the first 90° bridge is connected to the first port of the second 90° bridge via the first filter, and the second port of the first 90° bridge is connected to the second port of the second 90° bridge via the second filter; and
both an operating frequency band of the first 90° bridge and an operating frequency band of the second 90° bridge cover a frequency of the first signal and a frequency of the second signal; and an operating frequency band of the first filter and an operating frequency band of the second filter cover the frequency of the first signal but do not cover the frequency of the second signal.

6. The radio frequency component according to claim 5, wherein one of a third port of the second 90° bridge and a fourth port of the second 90° bridge is configured to receive the third signal, and the other port is configured to output the second signal.

7. The radio frequency component according to any one of claim 1, 3, or 5, wherein a first bridge arm between the first port and the second port of the first 90° bridge is grounded; and/or
a second bridge arm between the third port and the fourth port of the first 90° bridge is grounded.

8. The radio frequency component according to any one of claim 1, 3, or 5, wherein in the first 90° bridge, a midpoint of a third bridge arm between the first port and the fourth port is connected to a midpoint of a fourth bridge arm between the second port and the third port via a fifth bridge arm, and a length of the third bridge arm and a length of the fourth bridge arm are both λ/2, wherein λ is a wavelength of a signal at a center frequency of the operating frequency band of the first 90° bridge.

9. The radio frequency component according to claim 8, wherein both the third bridge arm and the fourth bridge arm of the first 90° bridge are in a curved shape.

10. The radio frequency component according to any one of claim 1, 3, or 5, wherein a first bridge arm between the first port and the second port in the second 90° bridge; and/or a second bridge arm between the third port and a fourth port in the second 90° bridge is grounded.

11. The radio frequency component according to any one of claim 1, 3, or 5, wherein in the second 90° bridge, a midpoint of a third bridge arm between the first port and a fourth port is connected to a midpoint of a fourth bridge arm between the second port and the third port via a fifth bridge arm, and a length of the third bridge arm and a length of the fourth bridge arm are both λ/2, wherein λ is a wavelength of a signal at a center frequency of the operating frequency band of the second 90° bridge; and
both the third bridge arm and the fourth bridge arm of the second 90° bridge are in a curved shape.

12. The radio frequency component according to any one of claim 1, 3, or 5, wherein the radio frequency component further comprises a substrate, the first 90° bridge and the second 90° bridge are disposed on a same side of the substrate, a metal layer is disposed on a side that is of the substrate and that is opposite to the first 90° bridge and the second 90° bridge, and the first filter and the second filter are disposed on the metal layer.

13. The radio frequency component according to claim 12, wherein the first filter and the second filter are dielectric substrate filters or cavity filters.

14. The radio frequency component according to claim 12, wherein the first filter and the second filter are cavity filters, and the substrate is a tuning cover plate of the cavity filters.

15. The radio frequency component according to claim 14, wherein a plurality of resonators are disposed in a cavity of the cavity filter, the substrate covers an opening of the cavity, a plurality of tuning sleeves are disposed on the metal layer, one tuning screw is fastened in each of the tuning sleeves, and a plurality of tuning screws cooperate with the plurality of resonators in one-to-one correspondence.

16. The radio frequency component according to any one of claim 1, 3, or 5, wherein the first port and the second port of the first 90° bridge are respectively connected to the first filter and the second filter through a metalized via or a filter port connection pin; and the first port and the second port of the second 90° bridge are respectively connected to the first filter and the second filter through a metalized via or a filter port connection pin.

17. The radio frequency component according to claim 12, wherein the substrate comprises any one of a glass substrate, a plastic substrate, a ceramic substrate, or a printed circuit board.

18. An antenna system, comprising a radiating element and the radio frequency component according to any one of claims 1 to 17, wherein the radiating element is connected to the radio frequency component.

19. A base station, comprising an antenna mounting support and the antenna system according to claim 18, wherein the antenna system is mounted on the antenna mounting support.
